# EUROPÄISCHE PATENTSCHRIFT

(11) **EP 0 472 239 B1**
(45) Veröffentlichungstag und Bekanntmachung des Hinweises auf die Patenterteilung: **08.11.1995**
(21) Anmeldenummer: 91202086.4
(22) Anmeldetag: 15.08.1991
(51) Int. Cl.: H04N 5/14

(54) **Verfahren zur Ermittlung horizontaler Bewegungen in den Bildinhalten eines Fernsehsignals**
Method for evaluating horizontal movements in picture content of a television signal
Méthode d'évaluation des mouvements horizontaux dans le contenu d'images d'un signal de télévision

(30) Priorität: 22.08.1990 DE 4026511; 09.10.1990 DE 4031921
(43) Veröffentlichungstag der Anmeldung: 26.02.1992
(73) Patentinhaber: Philips Patentverwaltung GmbH, 22335 Hamburg (DE); Philips Electronics N.V., 5621 BA Eindhoven (NL)
(72) Erfinder: Ibenthal, Achim, W-2200 Elmshorn (DE)
(74) Vertreter: von Laue, Hanns-Ulrich, Dipl.-Ing.

(56) Entgegenhaltungen:
- EP-A- 0 348 320

## Beschreibung

Die Erfindung betrifft ein Verfahren zur Ermittlung horizontaler Bewegungen in den Bildinhalten zeitlich aufeinanderfolgender aus Bildzeilen aufgebauten Bilder oder Teilbilder eines Bildsignals.

Beispielsweise zur Wandlung der Übertragungsnorm eines Fernsehsignals oder für verschiedene Verfahren zur Verbesserung der Bildqualität eines Fernsehsignals sind Informationen darüber erforderlich, in welchen Bereichen eines Bildes eine Bewegung stattfindet und wie stark diese Bewegung ist. Dieses Problem stellt sich in verstärkter Form bei einem Fernsehsignal, dessen Vollbilder in Form zweier aufeinanderfolgender im Zwischenzeilenverfahren generierter Teilbilder vorliegen, da diese beiden Teilbilder verschiedene Bewegungsphasen einer gegebenenfalls vorliegenden Bewegung wiedergeben. Soll beispielsweise eine Verdoppelung der Vertikalfrequenz des Fernsehsignals zur Unterdrückung des Großflächen-Flimmerns vorgenommen werden, so müssen zwischen den vorliegenden Teilbildern des Fernsehsignals neue Bilder generiert werden. Soll eine gegebenenfalls in den Bildern des Fernsehsignals vorliegende Bewegung richtig wiedergegeben werden, so ist es für die Generierung der neuen Bilder erforderlich, zu wissen, in welchen Bereichen der Bildinhalte der Bilder eine Bewegung stattfindet und in welchem Umfang diese stattfindet.

Es sind verschiedene Verfahren zur Ermittlung von Bewegungen in den Bildinhalten der Bilder bzw. Teilbilder eines Fernsehsignals bekannt, welche meist zweidimensional arbeiten, also sowohl vertikale wie auch horizontale Bewegungen in den Bildinhalten ermitteln. Diese Verfahren sind meist sehr aufwendig und daher insbesondere für den Einsatz in Fernsehgeräten für Endverbraucher zu unwirtschaftlich.

Aus EP-A-0 348 320 ist ein Verfahren bekannt, bei dem durch Vergleich aufeinanderfolgender Bildpunkte Kanten ermittelt werden sollen. Es ist für jeden Bildpunkt zunächst ein durch ein nicht näher angegebenes Bewegungsschätzungsverfahren ermittelter Bewegungsvektor vorgegeben, dessen Gültigkeit nachfolgend überprüft wird.

Es ist Aufgabe der Erfindung, ein Verfahren der eingangs genannten Art anzugeben, das es gestattet, horizontale Bewegungen in den Bildinhalten möglichst genau anzugeben. Darüber hinaus soll das Verfahren mittels möglichst einfacher Anordnungen durchführbar sein.

Diese Aufgabe ist erfindungsgemäß dadurch gelöst, daß
- durch Vergleich der Bildpunkt-Werte aufeinanderfolgender Bildpunkte in den Bildzeilen Kanten ermittelten werden,
- durch Vergleich der Lage der ermittelten Kanten in aufeinanderfolgenden Bildern bzw. Teilbildern für jede ermittelte Kante ein Verschiebungsvektor bestimmt wird, der die horizontale Verschiebung der Kante angibt,
- für jeden der Verschiebungsvektoren durch Vergleich der Bildpunktwerte mehrerer hinter der jeweils zugeordneten Kante liegender Bildpunkte wird, ob diese Vektoren zutreffende Werte aufweisen,
- aus mehreren aufeinanderfolgenden Verschiebungsvektoren, für die diese Überprüfung ein positives Ergebnis erbracht hat, ein Kandidatenvektor ausgefiltert wird und
- für jeden Bildpunkt einer Bildzeile eines Bildes bzw. Teilbildes einzeln überprüft wird, ob eine Bewegung entsprechend eines oder mehrerer Kandidatenvektoren oder ob keine Bewegung des Bildpunktes vorliegt, indem der Wert des Bildpunktes mit dem Wert des um den Kandidatenvektor verschobenen Bildpunktes und des Bildpunktes gleicher Lage des nachfolgenden Bildes bzw. Teilbildes verglichen wird.

Das Verfahren ist sowohl für Fernsehsignale einsetzbar, bei denen ohne Zeilensprung nacheinander vollständige Vollbilder übertragen werden, wie auch für solche Fernsehsignale, bei denen sich ein Vollbild jeweils aus zwei nacheinander übertragenen, im Zeilensprungverfahren generierten Teilbildern zusammensetzt. Insbesondere für die letztgenannten Fernsehsignale ist, wie oben erläutert, eine Detektion der Bewegungen von besonderem Interesse. Die nachfolgend näher erläuterten Verfahrensschritte beziehen sich jeweils für zeitlich aufeinanderfolgend übertragene Bilder oder Vollbilder. Bei Fernsehsignalen der erstgenannten Art werden also immer zeitlich nacheinander übertragene Vollbilder betrachtet, während bei Fernsehsignalen der zweitgenannten Art jeweils zeitlich aufeinanderfolgende Teilbilder zur Durchführung des Verfahrens herangezogen werden. Im folgenden wird nur noch die Rede sein von aufeinanderfolgenden Teilbildern eines Fernsehsignals, das Verfahren ist jedoch uneingeschränkt auch auf Fernsehsignale anwendbar, bei denen jeweils ein gesamtes Vollbild übertragen wird.

Zur Ermittlung horizontaler Bewegungen in den Bildinhalten der Teilbilder eines Fernsehsignals wird zunächst in jeder Bildzeile eines jeden Teilbildes eine Detektion von Kanten vorgenommen. Kanten in dem Fernsehsignal werden durch Vergleich der Bildpunkt-Werte aufeinanderfolgender Bildpunkte innerhalb jeder Bildzeile ermittelt. Es ist ersichtlich, daß dann eine Kante vorliegt, wenn BildpunktWerte benachbarter Bildpunkte stark voneinander abweichen. Wird in einem Teilbild N eine Kante in einer bestimmten Lage innerhalb einer bestimmten Bildzeile ermittelt, so wird in dem darauffolgenden Teilbild in der gleichen Bildzeile versucht, die zuvor detektierte Kante wieder aufzufinden. Wird in einem ähnlichen Bildpunktbereich innerhalb der gleichen Bildzeile des zweiten Teilbildes eine Kante ermittelt, so wird festgestellt, ob die Kante sich bewegt hat bzw. um welchen Wert die Kante sich bewegt hat. Wird eine Verschiebung der Kante festgestellt, so wird ein Verschiebungsvektor generiert, der das Maß der horizontalen Verschiebung der Kante angibt, der also angibt, um wieviele Bildpunkte sich die Kante in derselben Bildzeile zwischen den beiden aufeinanderfolgenden Teilbildern verschoben hat.

Dieser Verschiebungsvektor ist dann für die weitere Signalverarbeitung geeignet, d.h. er kann beispielsweise dazu herangezogen werden, die Lage der Kante, für die der Verschiebungsvektor gültig ist, in einem neuen Teilbild zu ermitteln, daß die zwischen den beiden Teilbildern zeitlich neu generiert wird, aus denen heraus der Verschiebungsvektor ermittelt wurde. Ferner können die ermittelten Verschiebungsvektoren zur Reduktion des Flickerns herangezogen werden, das durch den Zeilensprung in einem entsprechend generierten Fernsehsignal entlang in Bildzeilenrichtung verlaufender Kanten hervorgerufen wird.

Um sicherzustellen, daß es sich bei einem ermittelten Verschiebungsvektor nicht um ein Zufallsergebnis handelt, das beispielsweise durch Störungen oder Rauschen ausgelöst sein kann, wird die Gültigkeit eines jeden Verschiebungsvektors überprüft. Dies geschieht dadurch, daß für mehrere Bildpunkte hinter der ermittelten Kante deren Bildpunktwerte in den beiden Teilbildern verglichen werden. Hat sich nämlich eine Kante tatsächlich zwischen den beiden Teilbildern bewegt, so gilt dies auch für die nachfolgend übertragenen, bei üblicher Darstellung rechts der Kante befindlichen, Bildpunkte. Die Werte der Bildpunkte hinter der Kante müßten also in beiden Teilbildern auch bei Verschiebung der Kante bzw. der Bildpunkte ähnliche Werte aufweisen. Nur wenn dies der Fall ist, wird davon ausgegangen, daß eine tatsächlich bewegte Kante detektiert wurde. Es wird dann aus mehreren aufeinanderfolgenden Verschiebungsvektoren, d.h. also mehreren zeitlich hintereinander ermittelten Verschiebungsvektoren, ein Kandidatenvektor ausgefiltert. Dies bedeutet, daß die Werte mehrerer zeitlich aufeinanderfolgender Verschiebungsvektoren miteinander verglichen werden und daß beispielsweise eine Art Mittelwert als Kandidatenvektor herangezogen wird.

Dieser Kandidatenvektor gibt nun quasi an, welches Ausmaß eine vermutete Bewegung haben könnte. Diese Bewegung muß jedoch nicht zwangsläufig für alle Bildpunkte eines Teilbildes oder auch nachfolgender Teilbilder gelten. Es wird daher für diejenigen Bilder bzw. Teilbilder oder auch einzelne Bildzeilen der Bilder bzw. Teilbilder außerdem eine Überprüfung vorgenommen, ob der oder die ermittelten Kandidatenvektoren eine für den einzelnen Bildpunkt tatsächlich zutreffende Bewegung angeben. Dazu werden für jeden Bildpunkt wenigstens zwei Vergleiche vorgenommen. Dies geschieht in dem für einen Bildpunkt, für den die Richtigkeit eines ermittelten Kandidatenvektors überprüft werden soll, der Wert dieses Bildpunktes mit dem entsprechenden Bildpunkt des darauffolgenden Teilbildes verglichen wird. Der entsprechende Bildpunkt liegt in dem zweiten Teilbild in der gleichen Bildzeile um den Kandidatenvektor verschoben. Es wird weiterhin eine zweite Überprüfung vorgenommen, in dem der betreffende Bildpunkt mit dem Bildpunkt gleicher Position innerhalb der gleichen Bildzeile des nachfolgenden Teilbildes verglichen wird. Es ist ersichtlich, daß der erste Vergleich ergibt, ob der betreffende Bildpunkt um den Kandidatenvektor verschoben in dem zweiten Teilbild in der gleichen Bildzeile wieder auftritt und daß der zweite Vergleich ergibt, ob der Bildpunkt eventuell keine Bewegung zwischen den beiden Teilbildern erfahren hat. Aus diesen Vergleichen kann für jeden Bildpunkt einzeln festgestellt werden, ob er einer horizontalen Bewegung gemäß dem oder den Kandidatenvektoren unterliegt.

Es können wie gesagt für die Überprüfungen der Bildpunkte einer Bildzeile ein oder mehrere Kandidatenvektoren ermittelt werden. Diese Kandidatenvektoren können meist erst am Ende einer Bildzeile ermittelt werden, können also frühestens für die darauffolgende Bildzeile für die oben genannten Vergleicher herangezogen werden. Darüber hinaus gibt es jedoch auch die Möglichkeit, die Kandidatenvektoren für entsprechende oder ähnlich angeordnete Bildzeilen darauffolgender Bilder oder Teilbilder anzuwenden.

Das Verfahren ist mittels Schaltungsanordnungen durchführbar, welche einen Umfang aufweisen, der beispielsweise die vollständige Integration einer solchen Schaltungsanordnung in einem IC und somit eine wirtschaftliche Anwendung auch für Endverbrauchergeräte gestattet.

Wie oben bereits erläutert wurde, können die ermittelten Kandidatenvektoren für verschiedene Bereiche nachfolgender Bildzeilen oder auch Teilbilder eingesetzt werden. Um eine noch sicherere Vorhersage von Bewegungen mittels der Kandidatenvektoren zu gestatten, hat es sich als vorteilhaft erwiesen, die aus den Verschiebungsvektoren ausgefilterten Kandidatenvektoren ihrerseits nochmals zu filtern. Dazu ist nach einer Ausgestaltung der Erfindung vorgesehen, daß die aus den Verschiebungsvektoren ausgefilterten Kandidatenvektoren ihrerseits einer Nachfilterung unterzogen werden und daß aus den für die gleichen Bildzeilen wenigstens zweier aufeinanderfolgender Bilder bzw. Teilbilder ermittelten Kandidatenvektoren ein nachgefilterter Kandidatenvektor ausgefiltert wird. Da im allgemeinen davon ausgegangen werden kann, daß die gleichen Bildzeilen aufeinanderfolgender Teilbilder auch ähnliche Bildinhalte aufweisen, müßte auch die Bewegung in den gleichen Zeilen der beiden Teilbilder ähnlich sein. Es ist daher vorteilhaft, die Kandidatenvektoren dieser Zeilen nochmals einer Nachfilterung zu unterziehen. Bei dieser Nachfilterung kann es sich wiederum um eine Art Mittelwertbildung handeln. Auf diese Weise wird die Voraussagesicherheit der Kandidatenvektoren weiter erhöht.

Nach einer weiteren Ausgestaltung der Erfindung ist vorgesehen, daß für jede Bildzeile eines Bildes bzw. Teilbildes genau ein Kandidatenvektor aus den drei zuletzt ermittelten Verschiebungsvektoren ausgefiltert wird, welcher seinerseits der Nachfilterung unterzogen wird.

Die Ausfilterung der Kandidatenvektoren aus den Verschiebungsvektoren wird also in der Weise vorgenommen, daß pro Bildzeile genau ein Kandidatenvektor ermittelt wird. Dazu werden am Ende jeder Bildzeile die zuletzt ermittelten drei Verschiebungsvektoren herangezogen. Diese drei Verschiebungsvektoren müssen nicht unbedingt in dieser Zeile ermittelt worden sein, es kann sich, wenn beispielsweise in der betreffenden Zeile kein Verschiebungsvektor ermittelt wurde, auch um die Verschiebungsvektoren einer vorigen Bildzeile handeln. In jedem Falle werden aber zur Ermittlung eines Kandidatenvektors die zeitlich zuletzt ermittelten drei Verschiebungsvektoren ausgefiltert. Auch durch diese Ausfilterung wird der Vorteil erzielt, daß der gewonnene Kandidatenvektor mit größerer Sicherheit nicht durch Störungen verursacht wurde. So wird ein gegebenenfalls falscher Verschiebungsvektor in das Endergebnis kaum eingehen.

Nach einer weiteren Ausgestaltung der Erfindung ist vorgesehen, daß zur Nachfilterung der Kandidatenvektoren diejenigen Kandidatenvektoren der gleichen Zeilen dreier aufeinanderfolgender Bilder bzw. Teilbilder herangezogen werden. Die oben beschriebene Nachfilterung der Kandidatenvektoren aus Kandidatenvektoren die für gleiche Bildzeilen aufeinanderfolgender Bilder bzw. Teilbilder ermittelt wurden, kann insbesondere für drei Kandidatenvektoren dreier aufeinanderfolgender Bilder bzw. Teilbilder vorgenommen werden. Es wird hierbei ein guter Kompromiß zwischen einerseits genügend schneller Reaktion der Kandidatenvektoren auf veränderte Bewegungen wie andererseits eine genügende Störsicherheit erzielt. Nach einer weiteren vorteilhaften Ausgestaltung der Erfindung ist vorgesehen, daß die Filterung der Verschiebungsvektoren und/oder die Nachfilterung der Kandidatenvektoren eine Median-Filterung ist. Eine Median-Filterung ist sowohl für die Ausfilterung der Verschiebungsvektoren zur Gewinnung eines Kandidatenvektors wie auch für die Filterung mehrerer Kandidatenvektoren zur Nachfilterung und zur Gewinnung eines gefilterten Kandidatenvektors vorteilhaft, da bei der Median-Filterung aus mehreren aufeinanderfolgenden Werten, beispielsweise aus drei Werten, der jeweils mittlere Wert als Filterwert entnommen wird. Dies hat zur Folge, daß ein "Ausreißer" in das Filterergebnis nicht eingeht.

Aufgrund der stufenweisen Ausfilterung des Kandidatenvektors aus den Verschiebungsvektoren und der nachfolgend vorgenommenen Nachfilterung der Kandidatenvektoren liegt ein solcher schließlich nachgefilterter Kandidatenvektor frühestens am Ende der Bildzeile desjenigen Bildes vor, in dem der in das Filterergebnis zuletzt eingehende Kandidatenvektor ermittelt wurde. Aus diesem Grunde kann der nachgefilterte Kandidatenvektor auch frühestens ab diesem Zeitpunkt für die bildpunktweise Überprüfung einer tatsächlich gemäß dem Kandidatenvektor vorliegenden Bewegung herangezogen werden. Der Kandidatenvektor steht also in dem betreffenden Bild eigentlich zu spät zur Verfügung. Es ist daher vorteilhaft, den Kandidatenvektor erst in einer Bildzeile eines nachfolgenden Teilbildes einzusetzen. Dazu ist nach einer vorteilhaften Ausgestaltung vorgesehen, daß der nachgefilterte Kandidatenvektor für die Bildpunkte einer Bildzeile zur Überprüfung herangezogen wird, ob eine Bewegung entsprechend diesem Kandidatenvektor oder keine Bewegung vorliegt, und daß diese Bildzeile in dem Bild bzw. Teilbild enthalten ist, das den Bildern bzw. Teilbildern zeitlich folgt, für die
die Kandidatenvektoren ermittelt wurden, aus denen der nachgefilterte Kandidatenvektor hervorgegangen ist.

Da die Ausfilterung des nachgefilterten Kandidatenvektors sich über mehrere Zeilen hinzieht, wird sich sein Wert im Grunde genommen auf einen mittleren Wert der drei vorhergehenden Zeilen beziehen. Es ist aus diesem Grunde vorteilhaft, daß der nachgefilterte Kandidatenvektor in dem nachfolgenden Teilbild für Zeilen herangezogen wird, welche vor der Zeile liegen, für die der Kandidatenvektor an sich ermittelt wurde. Dazu ist nach einer Ausgestaltung der Erfindung vorgesehen, daß der nachgefilterte Kandidatenvektor für die bildpunktweise Überprüfung derjenigen Bildzeile des nachfolgenden Bildes bzw. Teilbildes herangezogen wird, die drei Zeilen vor den Bildzeilen der vorigen Bilder bzw. Teilbilder liegt, für die die Kandidatenvektoren ermittelt wurden, aus denen der nachgefilterte Kandidatenvektor hervorgegangen ist.

In weiterer Ausgestaltung der Erfindung ist vorgesehen, daß die für jeden Bildpunkt einer Bildzeile eines Bildes bzw. Teilbildes vorzunehmende Überprüfung, ob eine Bewegung entsprechend eines oder mehrerer Kandidatenvektoren oder ob keine Bewegung der Bildpunkte vorliegt, indem der Wert des Bildpunktes mit dem Wert des um den Kandidatenvektor verschobenen Bildpunktes und des Bildpunktes gleicher Lage des nachfolgenden Bildes bzw. Teilbildes verglichen wird, in der Weise erfolgt, daß die Überprüfungsergebnisse für eine vorgebbare Anzahl von Bildpunkten, die etwa je zur Hälfte vor und hinter dem jeweils bezüglich seiner Bewegung zu untersuchenden Bildpunkt in dessen Bildzeile liegen, getrennt für beide Überprüfungen aufsummiert werden und daß die Entscheidung, ob der, gegebenenfalls nachgefilterte, Kandidatenvektor für den untersuchten Bildpunkt gültig ist oder nicht, in Abhängigkeit des Wertes dieser Summe getroffen wird. Auch wenn der, gegebenenfalls nachgefilterte, Kandidatenvektor richtig ermittelt wurde und einen an sich richtigen Wert aufweist, kann es bei den oben erläuterten bildpunktweisen Überprüfungen zu Fehlergebnissen kommen. Daher ist es vorteilhaft, die Überprüfungen bzw. die Überprüfungsergebnisse auf mehrere aufeinanderfolgende Bildpunkte aufzusummieren und den Kandidatenvektor gemeinsam für diese Bildpunkte in Abhängigkeit des Wertes der Summe für gültig oder ungültig zu erklären. Auf diese Weise wird der Einfluß von gegebenenfalls vorliegendem Bildrauschen oder Bildstörungen deutlich vermindert.

Es hat sich hierbei insbesondere als vorteilhaft erwiesen, wie nach weiteren Ausgestaltungen der Erfindung vorgesehen ist, daß der Kandidatenvektor für den untersuchten Bildpunkt nur dann gültig ist, wenn für die vorgebbare Anzahl von Bildpunkten häufiger eine Bewegung entsprechend dem Kandidatenvektor als keine Bewegung ermittelt wurde und/oder, daß der Kandidatenvektor für den untersuchten Bildpunkt nur dann gültig ist, wenn für wenigstens die Hälfte der vorgebbaren Anzahl von Bildpunkten in der Überprüfung eine Bewegung entsprechend dem Kandidatenvektor ermittelt wurde.

Ferner sollte der Kandidatenvektor eine Bewegung von wenigstens drei Bildpunkten pro Bild bzw. Teilbild angeben, da eine Bewegung unterhalb dieses Wertes ohnehin in den meisten Fällen nicht auswertbar sein wird, d.h. insbesondere eine Differenzierung zwischen einer Bewegung gemäß dem Vektor und keiner Bewegung schwierig sein wird, und da für kleinere Werte die Störwahrscheinlichkeit zunimmt. Es ist daher nach weiterer Ausgestaltung vorgesehen, daß der Kandidatenvektor für den untersuchten Bildpunkt nur dann gültig ist, wenn der Kandidatenvektor selbst einen vorgebbaren Mindestwert überschreitet und daß
der Mindestwert vorzugsweise eine Bewegung von zwei Bildpunkten pro Bild bzw. Teilbild beträgt.

Nach einer weiteren Ausgestaltung der Erfindung ist vorgesehen, daß die vorgebbare Anzahl von Bildpunkten größer als 7 und kleiner als 25 ist.

Die vorgebbare Anzahl von Bildpunkten, für die die Überprüfungsergebnisse aufsummiert werden und für die eine gemeinsame Entscheidung der Gültigkeit oder Ungültigkeit des oder der Kandidatenvektoren vorgenommen wird, liegt vorteilhaft in diesem Bereich, da einerseits auch noch die Bewegung relativ kleiner Objekte richtig erkannt werden soll und andererseits diese Entscheidung mit genügender Sicherheit erkannt werden muß.

Wie oben bereits erläutert wurde, ist die Gültigkeit jedes ermittelten Verschiebungsvektors durch Vergleich der Bildpunktwerte mehrerer hinter der jeweils zugeordneten Kante liegender Bildpunkte zu überprüfen. Dies kann vorteilhaft dadurch geschehen, daß die Gültigkeit jedes der Verschiebungsvektoren durch Aufsummieren der Werte von jeweils acht Bildpunkten, die in den beiden Bildern bzw. Teilbildern hinter der ermittelten Kante liegen, und Vergleich der Werte der beiden Summen überprüft wird. Auch hier wird wieder durch Vergleich der Summenwerte der acht Bildpunkte eine genügende Störsicherheit erzielt.

Die Ermittlung von Kanten innerhalb der Bildzeilen kann vorteilhafterweise gemäß einer weiteren Ausgestaltung der Erfindung in der Weise vorgenommen werden, daß der Vergleich der Bildpunkt-Werte aufeinanderfolgender Bildpunkte in den Bildzeilen zur Kantenermittlung mittels Differenzbildung der Bildpunktwerte vorgenommen wird und daß eine Kante nur dann detektiert wird, wenn diese
Differenz einen in Abhängigkeit der Modulationsstufe des Fernsehsignals variierten Schwellwert überschreitet.

Es ist hierbei insbesondere wichtig, daß der Wert des Schwellwertes der Modulationstiefe des Fernsehsignals nachgeführt wird. Es kann somit eine Anpassung der Detektionsempfindlichkeit an das Fernsehsignal selbst erzielt werden. Andererseits werden in Abhängigkeit der Modulationstiefe relativ schwach ausgebildete Kanten und damit auch die meisten Störungen nicht als Kanten detektiert.

Die Nachführung des Wertes des Schwellwertes kann insbesondere bildzeilenweise angepaßt werden. Dazu ist in weiterer Ausgestaltung vorgesehen, daß der Schwellwert den halben Wert des maximalen Bildpunktwertes der vorigen Bildzeile aufweist.

Wurde eine Kante ermittelt, so wird in der gleichen Bildzeile des darauffolgenden Bildes bzw. Teilbildes eine Wiedererkennung der Kante angestrebt. Für in dieser Bildzeile erkannte Kanten kann nur dann eine Zuordnung zu der zuvor in dem vorausgehenden Bild bzw. Teilbild in der gleichen Bildzeile ermittelten Kante vorgenommen werden, wenn diese Kanten eine genügende Ähnlichkeit aufweisen. Dazu hat es sich als vorteilhaft erwiesen, daß die Wiedererkennung der Kante in der gleichen Zeile des nachfolgenden Bildes bzw. Teilbildes nur dann erfolgt, wenn der für diese ermittelte Differenzwert um maximal 1/4 des maximalen Bildpunktwertes der vorigen Bildzeile von dem für die in dem anderen Bild bzw. Teilbild in der gleichen Bildzeile ermittelten Kanten-Differenzwert abweicht. Auch für diese Wiedererkennung der Kante wird also die Modulationstiefe eingesetzt, d.h. je kleiner diese Modulationstiefe ist, desto genauer muß die wiedererkannte
Kante in ihrem Wert mit der zuvor erkannten Kante übereinstimmen.

Ein ermittelter und gegebenenfalls nachgefilterter Kandidatenvektor wird, wie oben bereits erläutert, bildpunktweise daraufhin überprüft, ob tatsächlich eine Bewegung entsprechend seinem Wert vorliegt. Da hier eine völlige Identität selten zu erreichen sein wird, wird auch für diesen Vergleich ein Schwellwert eingesetzt, dessen Wert in Abhängigkeit des Bildinhaltes nachgeführt wird. Hier ist es jedoch vorteilhaft, die vertikale und horizontale Ortsfrequenz des Bildinhaltes zur Variation des Schwellwertes heranzuziehen. Für relativ hohe Ortsfrequenzen kann dabei der Schwellwert höher eingesetzt werden, d.h. die tatsächlich vorliegende Bewegung darf von der von dem Kandidatenvektor vorgegebenen Bewegung umso höher abweichen, je höher die lokale Ortsfrequenz des Bildinhaltes ist.

Nach einer weiteren Ausgestaltung der Erfindung ist für Fernsehsignale, welche im Zeilensprungverfahren generierte Teilbilder aufweisen, vorgesehen, daß in jeweils einem zweier aufeinanderfolgender Teilbilder vor Durchführung der Bewegungsermittlung eine vertikale Filterung, vorzugsweise eine Median-Filterung, vorgenommen wird.

Liegen im Zeilensprungverfahren generierte Teilbilder vor, so sind die Bildinhalte dieser Teilbilder in vertikaler Richtung quasi ineinander verkämmt, d.h. daß auch gleiche Bildzeilen der beiden Teilbilder an sich nicht den gleichen Bildinhalt wiedergeben. Um diesen Effekt wenigstens zu dämpfen, ist es daher vorteilhaft, jeweils eines zweier aufeinanderfolgender Teilbilder einer vertikalen Filterung zu unterziehen.

Für die Umwandlung eines Fernsehsignals von einer Übertragungsnorm in eine andere Übertragungsnorm oder auch für die Generierung zusätzlicher Teilbilder beispielsweise zur Verdopplung der Vertikalfrequenz des Fernsehsignals sind jeweils neue Bilder bzw. Teilbilder zu generieren. Für diese Bilder ergibt sich insbesondere für im Zeilensprungverfahren generierte Teilbilder das Problem, daß diese verschiedene Bewegungsphasen wiedergeben, und daß die neu zu generierenden Teilbilder die Bewegung richtig wiedergeben sollen. Es muß also bekannt sein, welche Bildinhalte
sich in welchem Umfange bewegen. Dazu ist das erfindungsgemäße Verfahren vorteilhaft einsetzbar.

Für Fernsehsignale, welche im Zeilensprungverfahren generierte Teilbilder aufweisen, ergibt sich darüber hinaus das Problem, daß bei in Bildzeilenrichtung verlaufenden Kanten aufgrund des Zeilensprungverfahrens ein Hin- und Herspringen dieser Kanten ergibt. Es sind daher Verfahren bekannt, dieses Zeilensprung-Flickern zu unterdrücken. Auch hierfür ist es jedoch wieder erforderlich zu wissen, in welchen Bereichen des Bildes bewegte Inhalte vorliegen. Auch hier ist das erfindungsgemäße Verfahren vorteilhaft einsetzbar.

Die Erfindung wird im folgenden anhand der Zeichnung näher erläutert. Es zeigen:
Fig. 1 eine Anordnung zur Durchführung des Verfahrens sowie eine vorgeschaltete Speicheranordnung und
Fig. 2 eine schematische Darstellung mehrerer aufeinanderfolgender Teilbilder zur Erläuterung der Gewinnung der Verschiebungs- und Kandidatenvektoren.

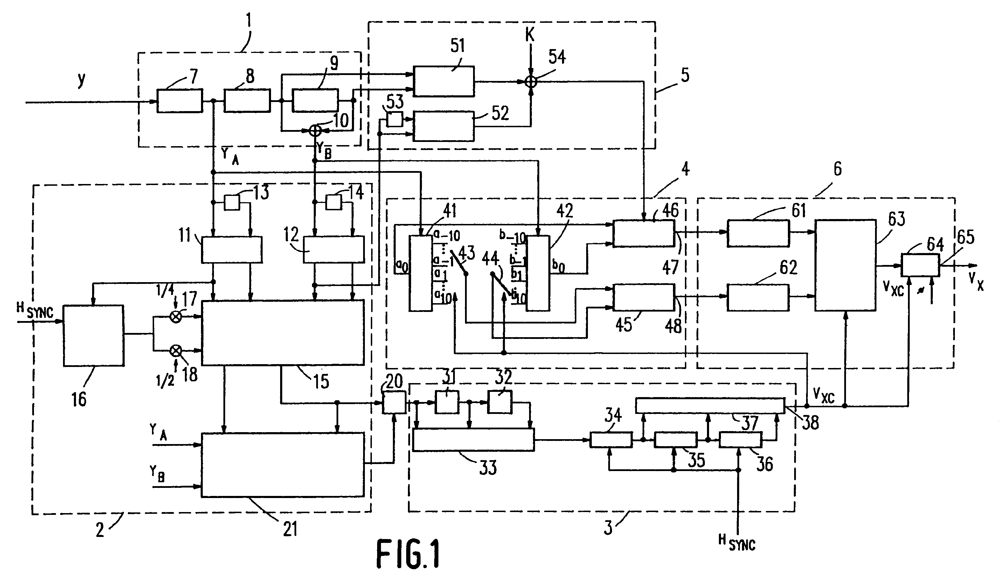

In Fig. 1 ist eine Anordnung zur Durchführung des Verfahrens schematisch in Form eines Blockschaltbildes dargestellt. Der Anordnung ist eine Speicheranorndung 1 vorgeschaltet, der ein Luminanzsignal Y zugeführt wird, welches Bestandteil eines digitalen Farbfernsehsignals ist.

Die Anordnung zur Durchführung des Verfahrens gliedert sich im wesentlichen in fünf Schaltungsblöcke, nämlich einer Anordnung 2 zur Verschiebungsvektor-Ermittlung und -Überprüfung, einer Filteranordnung 3, einer Anordnung 4 zur Kandidatenvektor-Überprüfung, einer Anordnung 5 zur Schwellwertadaption und einer Anordnung 6 zur Gültigkeits-Entscheidung.

In der Speicheranordnung 1 ist ein erster Teilbildspeicher 7 vorgesehen, dem das digitale Luminanzsignal Y zugeführt wird und dem ein zweiter Teilbildspeicher 8 nachgeschaltet ist. Dem Ausgang des zweiten Teilbildspeichers 8 ist ein Zeilenspeicher 9 nachgeschaltet. Das Ausgangssignal des zweiten Teilbildspeichers 8 sowie das Ausgangssignal des Zeilenspeichers 9 ist auf je einen Eingang eines Addierers 10 geführt. Da es sich bei dem Luminanzsignal Y um ein solches handelt, das im Zeilensprungverfahren generiert wird, in dem also jeweils zwei aufeinanderfolgende Teilbilder ein Vollbild bilden, wird mittels der Anordnung aus dem Zeilenspeicher 9 und dem Addierer 10 eine vertikale Interpolation jeweils zweier benachbarter Bildzeilen vorgenommen. Um einen richtigen Absolutwert des interpolierten Signals zu erhalten, kann dieses in nicht in der Figur dargestellter Weise mit einem Faktor 1/2 multipliziert werden. Am Ausgang des Addierers 10 steht das Luminanzsignal Y_{B} zur Verfügung, welches das vertikal interpolierte Luminanzsignal eines Teilbildes darstellt. Am Ausgang des ersten Teilbildspeichers 7 steht das Luminanzsignal Y_{A} zur Verfügung, welches das nicht interpolierte Luminanzsignal des vorigen Teilbildes darstellt. Die Luminanzsignale Y_{A} und Y_{B} stellen also die Luminanzsignale aufeinanderfolgender Teilbilder dar.

Diese beiden Luminanzsignale Y_{A} und Y_{B} sind je einem Eingang je eines Differenzwertbildners 11 bzw. 12 zugeführt. Dem jeweils anderen Eingang der Differenzwertbildner 11 und 12 ist das mittels eines Registers 13 bzw. 14 einen Abtasttakt, d.h. also einen Bildpunkt, verzögerte Luminanzsignal zugeführt. Den Differenzwertbildnern 11 und 12 stehen somit die Werte aufeinanderfolgender Bildpunkte laufend zur Verfügung. In diesen Differenzwertbildnern 11 und 12 wird die Differenz dieser aufeinanderfolgenden Bildpunkte sowie des Vorzeichen dieser Differenz gebildet und eine einen Kantendetektor 15 geliefert.

In dem Kantendetektor 15 werden nun in beiden Teilbildern aufgrund der von den Differenzwertbildnern 11 und 12 gelieferten Werte Kanten detektiert, wobei die Höhe der Differenzen ausgewertet wird. Es wird nur dann eine Kante detektiert, wenn die Differenzwerte einen bestimmten Schwellwert überschreiten. Die Höhe dieses Schwellwertes wird in Abhängigkeit der Modulationstiefe der vorigen Bildzeile des Fernsehsignals generiert. Dazu ist ein Maximum-Detektor 16 vorgesehen, welcher den maximalen Bildpunktwert der vorigen Bildzeile liefert. Dieser maximale Bildpunktwert wird einem Multiplizierer 17 sowie einem weiteren Multiplizierer 18 zugeführt. In dem Multiplizierer 18 wird dieser Maximumwert mit dem Faktor 1/2 multipliziert und dem Kantendetektor 15 zugeführt. Das Ausgangssignal des Multiplizierers 18 stellt den Schwellwert dar, der für die Detektion einer Kante in dem Kantendetektor 15 überschritten werden muß. Der Differenzwert muß also die Hälfte des maximalen Bildwertes der vorigen Bildzeile überschreiten. Ist dies der Fall, wird in dem Kantendetektor 15 in dem Luminanzsignal Y_{A} bzw. dem Luminanzsignal Y_{B} eine Kante detektiert. Diese Detektion findet in demjenigen Luminanzsignal zuerst statt, in dem die Kante zuerst auftritt. Ist eine solche Kante detektiert worden, wird in dem Kantendetektor 15 ein in der Figur nicht näher dargestellter Zähler in Gang gesetzt, der solange weiterzählt, bis die gleiche Kante in dem jeweils anderen Luminanzsignal wiederum detektiert wird. Zur Wiedererkennung der Kante darf der nunmehr festgestellte Differenzwert von dem für die Kante zuerst festgestellten Differenzwert Maximum um ± 1/4 des von dem Maximumdetektors 16 gelieferten Wertes abweichen. Die entsprechenden Toleranzwerte werden von dem Multiplizierer 17 geliefert, in dem der Maximumwert mit dem Faktor 1/4 multipliziert wird. Der Differenzwert der wiedererkannten Kante darf also um maximum ± 1/4 von dem der ursprünglich detektierten Kante abweichen. Ist diese Bedingung erfüllt, wird also die Kante in dem jeweils anderen Teilbild wiedererkannt, so wird der in dem Kantendetektor 15 enthaltene Zähler gestoppt. Der Zählerstand ist ein Maß dafür, um wieviele Bildpunkte sich die Kante verschoben hat. Es handelt sich hierbei um einen ermittelten Verschiebungsvektor. Dieser Verschiebungsvektor wird einem Register 20 sowie einer Anordnung 21 zur Überprüfung des Verschiebungsvektors zugeführt. Die in der Anordnung 2 enthaltene Anordnung 21 zur Überprüfung des Verschiebungsvektors bildet hinter einer detektierten Kante jeweils die Summe der acht nachfolgenden Bildpunkte in beiden Teilbildern. Diese beiden Summen werden miteinander verglichen. Unterschreitet die Differenz dieser beiden Summen einen vorgebbaren Schwellwert, so kann davon ausgegangen werden, daß der Verschiebungsvektor richtig ermittelt wurde. Die Anordnung 21 gibt dann ein entsprechendes Freigabesignal an das Register 20, so daß an dessen Ausgang der gültige Verschiebungsvektor erscheint.

Dem Register 20 ist eine Filteranordnung 3 nachgeschaltet, in welcher das Ausgangssignal des Registers 20 einem weiteren Register 31 zugeführt wird, dem ein weiteres Register 32 nachgeschaltet ist. In die Register 31 bzw. 32 wird immer dann ein neuer Wert eingelesen, wenn ein neuer Verschiebungsvektor zur Verfügung steht. Die Ausgänge der Register 20, 31 und 32 sind jeweils mit einem Medianfilter 33 verbunden. Bei diesen Signalen handelt es sich also jeweils um die zeitlich zuletzt ermittelten drei Verschiebungsvektoren. In dem Medianfilter 33 wird eine Filterung dieser drei Verschiebungsvektoren zur Gewinnung eines Kandidatenvektors vorgenommen. Jeweils am Ende einer Bildzeile wird diese Filterung vorgenommen, so daß zu diesen Zeitpunkten jeweils ein neuer Kandidatenvektor zur Verfügung steht. Die Median-Filterung bedeutet dabei, daß aus den jeweils drei Werten der mittlere Wert ausgewählt wird. Am Ausgang des Medianfilters 33 steht also der zunächst noch ungefilterte Kandidatenvektor zur Verfügung.

In der Filteranordnung 3 ist nun jedoch eine weitere Nachfilterung dieser Kandidatenvektoren vorgesehen. Diese weist drei hintereinander geschaltete Speicher 34, 35 und 36 auf. In diesen Speichern werden die von der Median-Filteranordnung 33 gelieferten Kandidatenvektoren um jeweils die Dauer eines Teilbildes verzögert. An den Ausgängen der drei Speicher 34, 35 und 36 stehen also die Kandidatenvektoren zur Verfügung, die jeweils in der gleichen Bildzeile dreier aufeinanderfolgender Teilbilder ermittelt wurden. Diese Ausgangssignale sind in der Filteranordnung 3 einem weiteren Medianfilter 37 zugeführt, in dem eine Median-Filterung dieser drei Kandidatenvektoren vorgenommen wird. Am Ausgang 38 des Medianfilters 37 steht also nach dieser Filterung ein nachgefilterter Kandidatenvektor zur Verfügung, der zur Überprüfung der tatsächlich vorliegenden Bewegung herangezogen wird.

Dieser nachgefilterte Kandidatenvektor ist in der Figur mit v_{xc} bezeichnet.

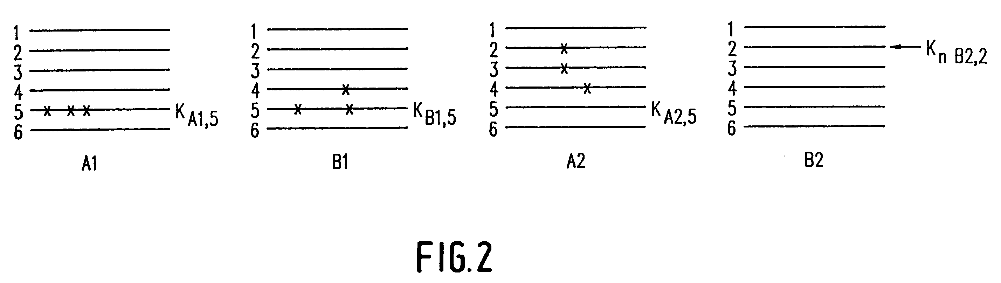

In der Anordnung 4 zur Kandidatenvektor-Überprüfung sind ein erstes Schieberegister 41, dem das Luminanzsignal Y_{A} zugeführt wird, sowie ein zweites Schieberegister 42, dem das Luminanzsignal Y_{B} zugeführt wird, vorgesehen. Diese Schieberegister 41 und 42 sind in der Lage, jeweils aufeinanderfolgend die Bildpunktwerte von 21 Bildpunkten abzuspeichern. Die Schieberegister 41 und 42 weisen 21 Ausgänge auf, so daß auf jeden einzelnen Bildpunktwert jederzeit zugegriffen werden kann. In der Figur sind diese Ausgänge mit A₋₁₀ bis A₁₀ bzw. mit B₋₁₀ bis B₁₀ bezeichnet. In der Anordnung 4 zur Kandidatenvektor-Überprüfung wird nun für jeden Bildpunkt einer Bildzeile eines Teilbildes einzeln überprüft, ob dieser Punkt einer Bewegung entsprechend des nachgefilterten Kandidatenvektors oder ob dieser Bildpunkt keiner Bewegung unterliegt. Aufgrund der sich durch die Anordnungen 2 und 3 bzw. 4 ergebenden zeitlichen Verzögerung geschieht dies in der Weise, daß der nachgefilterte Kandidatenvektor vₓₛ, dessen Ermittlung zuvor erläutert wurde, für die Bewegungsüberprüfung von Bildpunkten eingesetzt wird, die in dem Teilbild enthalten sind, das den drei Teilbildern folgt, aus deren ungefilterten Kandidatenvektoren der nachgefilterte Kandidatenvektor gewonnen wurde. Innerhalb dieses nachfolgenden Teilbildes wird der nachgefilterte Kandidatenvektor für die Überprüfung von Bildpunktwerten eingesetzt, die innerhalb dieses Teilbildes drei Zeilen vor den Zeilen liegen, von denen in den vorhergehenden Teilbildern die Kandidatenvektoren ermittelt wurden. Dieser Zusammenhang wird weiter unten anhand der Fig. 2 nochmals näher erläutert.

Der am Ausgang 38 des Medianfilters 37 zur Verfügung stehende Kandidatenvektor ist je einem Schalter 43 bzw. 44 zugeführt, dessen Schalterposition in Abhängigkeit des Wertes des nachgefilterten Kandidatenvektors v_{xc} verändert wird. Diese Schalter 43 bzw. 44 dienen dazu, aus den Abgriffen der Schieberegister 41 bzw. 42 auf diejenigen Bildpunktwerte zuzugreifen, die gemäß dem ermittelten nachgefilterten Verschiebungsvektor v_{xc} miteinander korrespondieren. Es wird also auf diejenigen Bildpunkte in den jeweils gleichen Bildzeilen aufeinanderfolgender Teilbilder zugegriffen, die gemäß dem nachgefilterten Kandidatenvektor v_{xc} bei einer vorliegenden Bewegung gleich sein sollten. Gibt der nachgefilterte Kandidatenvektor beispielsweise eine Verschiebung um zehn Bildpunkte an, so wird mittels der Schalter 43 und 44 auf Bildpunktwerte in den beiden Teilbildern zugegriffen, die um diesen Verschiebungsvektor auseinanderliegen.

In der Anordnung 4 ist ein Detektor 45 vorgesehen, mittels dessen festgestellt wird, ob tatsächlich eine Bewegung gemäß dem ermittelten nachgefilterten Kandidatenvektor v_{xc} vorliegt. Dazu werden dem Detektor 45 über die entsprechend gesteuerten Schalter 43 und 44 aus den Schieberegistern 41 und 42 diejenigen Bildpunkte geliefert, die um einen Wert gemäß dem Verschiebungsvektor innerhalb der betreffenden Bildzeile verschoben angeordnet sind. In dem Detektor 45 wird die Differenz dieser beiden Werte gebildet.

Es ist ferner ein weiterer Detektor 46 vorgesehen, der fest mit dem Mittelabgriff der beiden Verschiebungsregister 41 bzw. 42 verbunden ist. Es werden hier also immer Bildpunkte gleicher Position innerhalb der Bildzeilen der beiden Teilbilder miteinander verglichen. Es wird auf diese Weise ermittelt, ob gegebenenfalls keine Bewegung vorliegt. Auch in dem Detektor 46 wird dazu die Differenz der beiden gelieferten Bildpunktwerte erzeugt.

Sowohl im Detektor 45 wie auch in dem Detektor 46 werden die ermittelten Differenzwerte mit Schwellwerten verglichen. Diese Schwellwerte werden in Abhängigkeit der Ortsfrequenz des Fernsehsignals variiert. Dazu ist eine Anordnung 5 zur Schwellwertadaption vorgesehen, in welcher ein Differenzwertbildner 51 vorgesehen ist, dem das Ausgangssignal des zweiten Teilbildspeichers 8 sowie das des Zeilenspeichers 9 zugeführt wird. In diesem Differenzwertbildner wird also die Differenz solcher Bildpunkte geliefert, die in benachbarten Bildzeilen gleiche Position haben. Diese Differenz stellt ein Maß für die vertikale Ortsfrequenz dar. In einem weiterhin in der Anordnung 5 vorgesehenen Maximumdetektor 52 wird die horizontale Ortsfrequenz ermittelt. Dies geschieht dadurch, daß dem Maximumdetektor einerseits das von dem Differenzwertbildner 12 bereits ermittelte Differenzsignal zweier benachbarter Bildpunkte in derselben Bildzeile zugeführt wird. Mittels eines Registers 53 wird dieses Signal nochmals verzögert und ebenfalls dem Maximumdetektor 52 zugeführt, in dem das Maximum dieser beiden aufeinanderfolgenden Differenzwerte gebildet wird. Dieses Signal stellt ein Maß für die horizontale Ortsfrequenz dar. Die von dem Differenzwertbildner 51 und dem Maximumdetektor 52 gelieferten Signale werden einem Addierer 54 zugeführt, in dem diese Signale aufsummiert werden. Dieser Summe wird außerdem ein konstanter Faktor k addiert. Das Ausgangssignal des Addierers 54 stellt nun einen Schwellwert dar, der in Abhängigkeit sowohl der vertikalen wie auch der horizontalen Ortsfrequenz variiert wird. Dieser Schwellwert ist dem Detektor 46 zugeführt. In dem Detektor 46 wird dann festgestellt, daß keine Bewegung vorliegt, wenn die gebildete Differenz kleiner oder gleich diesem Schwellwert ist. Der Detektor 46 liefert an seinem Ausgang 47 dann ein entsprechendes Ausgangssignal.

Das von dem Addierer 54 gelieferte Schwellwertsignal wird außerdem dem Detektor 45 zugeführt, in dem dann eine Bewegung gemäß dem nachgefilterten Kandidatenvektor v_{xc} ermittelt wird, wenn die Differenz der beiden ihm zugeführten Bildpunktwerte kleiner oder gleich dem Schwellwertsignal ist. Sollte dies der Fall sein, liefert der Detektor 45 an seinem Ausgang 48 ein entsprechendes Ausgangssignal.

Zusammenfassend kann festgestellt werden, daß der Detektor 46 dann für einen bestimmten Bildpunkt ein Ausgangssignal liefert, wenn dieser Bildpunkt zwischen den beiden Teilbildern keine Bewegung erfahren hat. Hat der Bildpunkt jedoch eine Bewegung gemäß dem nachgefilterten Kandidatenvektor v_{xc} erfahren, so liefert der Detektor 45 für diesen Bildpunkt an seinem Ausgang ein entsprechendes Signal.

Diese Ausgangssignale der Detektoren 45 und 46 geben bereits eine gegebenenfalls detektierbare horizontale Bewegung an. Um dieses Ergebnis jedoch sicherer, insbesondere störsicherer, zu machen, ist der Anordnung 4 eine Anordnung 6 zur Gültigkeits-Entscheidung nachgeschaltet, in der diese Ausgangssignale der Detektoren 45 und 46 nochmals nachbearbeitet werden.

Der Ausgang 47 des Detektors 46 ist mit einem Summierglied 61 verbunden, in dem jeweils für 21 aufeinanderfolgende Bildpunkte die Ausgangssignale des Detektors 46 aufsummiert werden. In entsprechender Weise ist der Ausgang 48 des Detektors 45 mit einem Summierglied 62 verbunden, in dem ebenfalls für 21 aufeinanderfolgende Bildpunkte die Ausgangssignale des Detektors 45 aufsummiert werden. Die von den Summiergliedern 61 und 62 gelieferten Summensignale sind einer Auswerte- und Entscheidungseinheit 63 zugeführt. In dieser Auswerteeinheit 63 wird in Abhängigkeit der von den Summiergliedern 61 und 62 gelieferten Summe eine Entscheidung bezüglich der Gültigkeit des nachgefilterten Verschiebungsvektors für die betreffenden 21 Bildpunkte getroffen. Von der Auswerteeinheit 63 wird der betreffende nachgefilterte Verschiebungsvektor nur dann für gültig erklärt, wenn drei Bedingungen erfüllt sind. Es muß nämlich die von dem Summierglied 62 gelieferte Summe größer als 10 sein, außerdem muß diese Summe größer als die von dem Summierglied 61 gelieferte Summe sein. Darüber hinaus muß der nachgefilterte Kandidatenvektor v_{xc} einen Wert größer 2 aufweisen. Nur wenn diese drei Bedingungen erfüllt sind, gibt die Auswerteeinheit 63 ein entsprechendes Gültigkeitssignal ab, das einem Multiplexer 64 zugeführt wird.

Die von der Auswerteeinheit 63 vorgenommenen Entscheidungen bewirken, daß für den einzelnen Bildpunkt vorgenommene Entscheidung, ob der nachgefilterte Kandidatenvektor v_{xc} gültig ist oder nicht, in Abhängigkeit der von den Detektoren 45 und 46 abgegebenen Detektionsergebnisse der jeweils 20 benachbarten Bildpunkte getroffen wird. Die Auswerteeinheit 63 liefert nur dann ein Gültigkeitssignal, wenn für die überwiegende Zahl dieser Bildpunkte der nachgefilterte Kandidatenvektor eine tatsächlich vorliegende Bewegung angibt und wenn für die überwiegende Zahl dieser Bildpunkte diese Bewegung häufiger ermittelt worden ist als eine nicht vorliegende Bewegung.

Während der Zeiten, in denen von der Auswerteeinheit 63 der nachgefilterte Kandidatenvektor für gültig erklärt wird, wird dieser Kandidatenvektor, der am Ausgang 38 des Medianfilters 37 der Filteranordnung 3 zur Verfügung steht, am Ausgang 65 des Multiplexers 64 erscheinen. Während der übrigen Zeiten erscheint an dem Ausgang 65 des Multiplexers 64 der Wert Null. Dieses am Ausgang 65 des Multiplexers 64 zur Verfügung stehende Signal ist nun dasjenige, welches eine gegebenenfalls in den Bildinhalten vorliegende horizontale Bewegung detektiert und daß das Maß dieser Bewegung anliegt.

In Fig. 2 ist zur Erläuterung der Arbeitsweise der Anordnung gemäß Fig. 1 vier aufeinanderfolgende Teilbilder schematisch dargestellt. Anhand dieser Darstellung soll der Modus der Ermittlung der Verschiebungsvektoren, der Kandidatenvektoren und des nachgefilterten Kandidatenvektors näher erläutert werden.

Der Einfachheit halber weisen die Teilbilder gemäß der Darstellung in Fig. 2 nur jeweils sechs Zeilen auf. Es handelt sich Teilbilder A1 und B1 eines ersten Vollbildes und Teilbilder A2 und B2 eines zweiten Vollbildes.

In dem Teilbild A1 ist exemplarisch für die Bildzeile 5 die Ermittlung der Verschiebungsvektoren und des Kandidatenvektors dargestellt. Dieser hier für die Bildzeile 5 dargestellte Vorgang gilt selbstverständlich in entsprechender Weise für alle anderen Bildzeilen 1 bis 6 in gleicher Weise, in der Darstellung gemäß Fig. 2 wurde jedoch der Übersichtlichkeit halber die Ermittlung dieser Vektoren für die Bildzeile 5 angedeutet.

Am Ende einer Bildzeile, beispielsweise der Bildzeile 5 des Teilbildes A1 wird ein Kandidatenvektor jeweils aus den zeitlich zuletzt ermittelten drei Verschiebungsvektoren gebildet. In der Darstellung gemäß Fig. 2 ist dies in dem Teilbild A1 für drei Verschiebungsvektoren der Fall, die in der Bildzeile 5 ermittelt wurden, deren Ermittlungszeitpunkt in der Fig. schematisch mit einem Kreuz markiert ist. Am Ende der Bildzeile 5 des Teilbildes A1 wird dann der Kandidatenvektor K_{A1,5} ermittelt. Dieser Kandidatenvektor K_{A1,5} wird durch Median-Filterung aus den drei Verschiebungsvektoren ausgefiltert.

In dem Teilbild B1 wird ebenfalls am Ende der Bildzeile 5 ein Kandidatenvektor K_{B1,5} ermittelt. Auch für diesen Vektor gilt selbstverständlich, daß er aus den drei zuletzt ermittelten Verschiebungsvektoren gebildet wird. Da in dem in der Fig. 2 für das Teilbild B1 gewählten Beispielsfalle in der Bildzeile 5 dieses Teilbildes jedoch nur zwei Verschiebungsvektoren ermittelt wurden, wird außerdem der zuletzt in der Bildzeile 4 ermittelte Verschiebungsvektor zur Bildung des Kandidatenvektors K_{B1,5} herangezogen.

Auch in dem dem Teilbild wiederum nachfolgenden Teilbild A2 wird am Ende der Bildzeile 5 der Kandidatenvektor K_{A2,5} aus den zuletzt ermittelten drei Verschiebungsvektoren ausgefiltert. In dem in der Fig. 2 für das Teilbild A2 gewählten Beispielsfalle wurde in der Bildzeile 5 kein Verschiebungsvektor und in den Bildzeilen 4, 3 und 2 nur jeweils ein Verschiebungsvektor ermittelt. Für die Ermittlung des Kandidatenvektors K_{A2,5} am Ende der Bildzeile 5 stellen diese drei in den Bildzeilen 2, 3 und 4 ermittelten Verschiebungsvektoren die drei zuletzt ermittelten Verschiebungsvektoren dar, so daß aus diesen der Kandidatenvektor K_{A2,5} gebildet wird.

Aus diesen drei Kandidatenvektoren K_{A1,5}, K_{B1,5} und K_{A2,5} wird in der Anordnung gemäß Fig. 1, dort speziell in der Filteranordnung 3, ein nachgefilterter Kandidatenvektor gewonnen, der jedoch erst in dem Teilbild B2 gemäß Fig. 2 eingesetzt wird, das dem Teilbild A2 folgt. Der nachgefilterte Kandidatenvektor wird also erst in dem Teilbild eingesetzt, das dem letzten Teilbild folgt, in dem der letzte der drei Kandidatenvektoren ermittelt wurde, die
zur Gewinnung des nachgefilterten Kandidatenvektors eingesetzt wurden.

In dem Teilbild B2 wird dieser nachgefilterte Kandidatenvektor K_{nB2,2} jedoch nicht für die Bildzeile 5 eingesetzt, an deren Ende in den vorhergehenden Teilbildern jeweils die Kandidatenvektoren ermittelt wurden. Der nachgefilterte Kandidatenvektor K_{nB2,2} wird für drei Zeilen vorher, also für die Bildzeile 2 eingesetzt. Für die Bildpunkte dieser Bildzeile wird nun in der Anordnung 4 die Überprüfung vorgenommen, ob eine Verschiebung gemäß diesem nachgefilterten Kandidatenvektor K_{nB2,2} vorliegt, oder ob keine Bewegung vorliegt. Diesen nachgefilterten Kandidatenvektor K_{nB2,2} für drei Zeilen vor denjenigen Bildzeilen einzusetzen, aus denen die Kandidatenvektoren gewonnen wurden, die zur Gewinnung des nachgefilterten Kandidatenvektors eingesetzt wurden, hat den Vorteil, daß ggf. erst mit einer gewissen Verzögerung detektierte obere Objektbegrenzungen, die mit großer Wahrscheinlichkeit auch schon in vorigen Bildzeilen auftreten, in diesen bereits berücksichtigt werden können, d.h. eine Bewegung detektierter Kanten bereits überprüft werden kann.

## Patentansprüche

1. Verfahren zur Ermittlung horizontaler Bewegungen in den Bildinhalten zeitlich aufeinanderfolgender aus Bildzeilen aufgebauten Bilder oder Teilbilder eines Bildsignals,
dadurch gekennzeichnet, daß
- durch Vergleich der Bildpunkt-Werte aufeinanderfolgender Bildpunkte in den Bildzeilen Kanten ermittelten werden,
- durch Vergleich der Lage der ermittelten Kanten in aufeinanderfolgenden Bildern bzw. Teilbildern für jede ermittelte Kante ein Verschiebungsvektor bestimmt wird, der die horizontale Verschiebung der Kante angibt,
- für jeden der Verschiebungsvektoren durch Vergleich der Bildpunktwerte mehrerer hinter der jeweils zugeordneten Kante liegender Bildpunkte überprüft wird, ob diese Vektoren zutreffende Werte aufweisen,
- aus mehreren aufeinanderfolgenden Verschiebungsvektoren, für die diese Überprüfung ein positives Ergebnis erbracht hat, ein Kandidatenvektor ausgefiltert wird und
- für jeden Bildpunkt einer Bildzeile eines Bildes bzw. Teilbildes einzeln überprüft wird, ob eine Bewegung entsprechend eines oder mehrerer Kandidatenvektoren oder ob keine Bewegung des Bildpunktes vorliegt, indem der Wert des Bildpunktes mit dem Wert des um den Kandidatenvektor verschobenen Bildpunktes und des Bildpunktes gleicher Lage des nachfolgenden Bildes bzw. Teilbildes verglichen wird.

2. Verfahren nach Anspruch 1,
dadurch gekennzeichnet, daß die aus den Verschiebungsvektoren ausgefilterten Kandidatenvektoren ihrerseits einer Nachfilterung unterzogen werden und daß aus den für die gleichen Bildzeilen wenigstens zweier aufeinanderfolgender Bilder bzw. Teilbilder ermittelten Kandidatenvektoren ein nachgefilterter Kandidatenvektor ausgefiltert wird.

3. Verfahren nach Anspruch 2,
dadurch gekennzeichnet, daß für jede Bildzeile eines Bildes bzw. Teilbildes genau ein Kandidatenvektor aus den drei zuletzt ermittelten Verschiebungsvektoren ausgefiltert wird, welcher seinerseits der Nachfilterung unterzogen wird.

4. Verfahren nach Anspruch 2 oder 3,
dadurch gekennzeichnet, daß die nachgefilterten Kandidatenvektoren aus den Kandidatenvektoren der gleichen Bildzeilen dreier aufeinanderfolgender Bilder bzw. Teilbilder herangezogen werden.

5. Verfahren nach einem der Ansprüche 2 bis 4,
dadurch gekennzeichnet, daß die Filterung der Verschiebungsvektoren und/oder die Nachfilterung der Kandidatenvektoren eine Median-Filterung ist.

6. Verfahren nach Anspruch 4 oder 5,
dadurch gekennzeichnet, daß der nachgefilterte Kandidatenvektor für die Bildpunkte einer Bildzeile zur Überprüfung herangezogen wird, ob eine Bewegung entsprechend diesem Kandidatenvektor oder keine Bewegung vorliegt, und daß diese Bildzeile in dem Bild bzw. Teilbild enthalten ist, das den Bildern bzw. Teilbildern zeitlich folgt, für die die Kandidatenvektoren ermittelt wurden, aus denen der nachgefilterte Kandidatenvektor hervorgegangen ist.

7. Verfahren nach Anspruch 6,
dadurch gekennzeichnet, daß der nachgefilterte Kandidatenvektor für die bildpunktweise Überprüfung derjenigen Bildzeile des nachfolgenden Bildes bzw. Teilbildes herangezogen wird, die drei Zeilen vor den Bildzeilen der vorigen Bilder bzw. Teilbilder liegt, für die die Kandidatenvektoren ermittelt wurden, aus denen der nachgefilterte Kandidatenvektor hervorgegangen ist.

8. Verfahren nach einem der Ansprüche 1 bis 7,
dadurch gekennzeichnet, daß die für jeden Bildpunkt einer Bildzeile eines Bildes bzw. Teilbildes vorzunehmende Überprüfung, ob eine Bewegung entsprechend eines oder mehrerer Kandidatenvektoren oder ob keine Bewegung der Bildpunkte vorliegt, indem der Wert des Bildpunktes mit dem Wert des um den Kandidatenvektor verschobenen Bildpunktes und des Bildpunktes gleicher Lage des nachfolgenden Bildes bzw. Teilbildes verglichen wird, in der Weise erfolgt, daß die Überprüfungsergebnisse für eine vorgebbare Anzahl von Bildpunkten, die etwa je zur Hälfte vor und hinter dem jeweils bezüglich seiner Bewegung zu untersuchenden Bildpunkt in dessen Bildzeile liegen, getrennt für beide Überprüfungen aufsummiert werden und daß die Entscheidung, ob der, gegebenenfalls nachgefilterte, Kandidatenvektor für den untersuchten Bildpunkt gültig ist oder nicht, in Abhängigkeit des Wertes dieser Summe getroffen wird.

9. Verfahren nach Anspruch 8,
dadurch gekennzeichnet, daß der Kandidatenvektor für den untersuchten Bildpunkt nur dann gültig ist, wenn für die vorgebbare Anzahl von Bildpunkten häufiger eine Bewegung entsprechend dem Kandidatenvektor als keine Bewegung ermittelt wurde.

10. Verfahren nach Anspruch 8 oder 9,
dadurch gekennzeichnet, daß der Kandidatenvektor für den untersuchten Bildpunkt nur dann gültig ist, wenn für wenigstens die Hälfte der vorgebbaren Anzahl von Bildpunkten in der Überprüfung eine Bewegung entsprechend dem Kandidatenvektor ermittelt wurde.

11. Verfahren nach einem der Ansprüche 8 bis 10,
dadurch gekennzeichnet, daß der Kandidatenvektor für den untersuchten Bildpunkt nur dann gültig ist, wenn der Kandidatenvektor selbst einen vorgebbaren Mindestwert überschreitet und daß der Mindestwert vorzugsweise eine Bewegung von zwei Bildpunkten pro Bild bzw. Teilbild beträgt.

12. Verfahren nach einem der Ansprüche 8 bis 11,
dadurch gekennzeichnet, daß die vorggebare Anzahl von Bildpunkten größer als 7 und kleiner als 25 ist.

13. Verfahren nach einem der Ansprüche 1 bis 12,
dadurch gekennzeichnet, daß die Gültigkeit jedes der Verschiebungsvektoren durch Aufsummieren der Werte von jeweils acht Bildpunkten, die in den beiden Bildern bzw. Teilbildern hinter der ermittelten Kante liegen, und Vergleich der Werte der beiden Summen überprüft wird.

14. Verfahren nach einem der Ansprüche 1 bis 13,
dadurch gekennzeichnet, daß der Vergleich der BildpunktWerte aufeinanderfolgender Bildpunkte in den Bildzeilen zur Kantenermittlung mittels Differenzbildung der Bildpunktwerte vorgenommen wird und daß eine Kante nur dann detektiert wird, wenn diese Differenz einen in Abhängigkeit der Modulationssttiefe des Fernsehsignals variierten Schwellwert überschreitet.

15. Verfahren nach Anspruch 14,
dadurch gekennzeichnet, daß der Schwellwert den halben Wert des maximalen Bildpunktwertes der vorigen Bildzeile aufweist.

16. Verfahren nach Anspruch 14,
dadurch gekennzeichnet, daß die Wiedererkennung der Kante in der gleichen Zeile des nachfolgenden Bildes bzw. Teilbildes nur dann erfolgt, wenn der für diese ermittelte Differenzwert um maximal 1/4 des maximalen Bildpunktwertes der vorigen Bildzeile von dem für die in dem anderen Bild bzw. Teilbild in der gleichen Bildzeile ermittelten Kanten-Differenzwert abweicht.

17. Verfahren nach einem der Ansprüche 1 bis 16,
dadurch gekennzeichnet, daß für die bildpunktweise Überprüfung, ob eine Bewegung entsprechend der oder des, gegebenenfalls nachgefilterten Kandidatenvektors vorliegt, ein Schwellwert eingesetzt wird, dessen Wert , der bei dem Vergleich nicht überschritten werden darf, in Abhängigkeit der vertikalen und horizontalen Ortsfrequenz des Bildinhalts des Fernsehsignals variiert wird, wobei der Schwellwert zu hohen Ortsfrequenz hin zunimmt.

18. Verfahren nach einem der Ansprüche 1 bis 17 für ein Fernsehsignal, welches im Zeilensprungverfahren generierte Teilbilder aufweist,
dadurch gekennzeichnet, daß in jeweils einem zweier aufeinanderfolgender Teilbilder vor Durchführung der Bewegungsermittlung eine vertikale Filterung, vorzugsweise eine Median-Filterung, vorgenommen wird.

19. Verfahren nach einem der Ansprüche 1 bis 18,
dadurch gekennzeichnet, daß es sich bei dem Bildsignal um ein digitales Bildsignal handelt, in welchem Luminanz- und Chrominanz-Anteile enthalten sind und daß für das Verfahren nur der Luminanz-Signalanteil herangezogen wird.

20. Anordnung zur Durchführung des Verfahrens nach Anspruch 1,
dadurch gekennzeichnet, daß Mittel zum Vergleichen der Bildpunkt-Werte aufeinanderfolgender Bildpunkte vorgesehen sind, denen ein Kantendetektor nachgeschaltet ist, daß Mittel vorgesehen sind, die die Lage der Kanten in den aufeinanderfolgenden Bildern bzw. Teilbildern ermitteln und die für jede ermittelte Kante einen Verschiebungsvektor ermitteln, daß Mittel vorgesehen sind, die für jeden der Verschiebungsvektoren durch Vergleich der Bildpunktwerte mehrerer hinter der jeweils zugeordneten Kante liegender Bildpunkte überprüfen, ob diese Vektoren zutreffende Werte aufweisen und die aus mehreren aufeinanderfolgenden Verschiebungsvektoren, für die diese Überprüfung ein positives Ergebnis erbracht hat, einen Kandidatenvektor ausfiltern, und daß Mittel vorgesehen sind, die für jeden Bildpunkt einer Bildzeile eines Bildes bzw. Teilbildes einzeln überprüfen, ob eine Bewegung entsprechend eines oder mehrerer Kandidatenvektoren oder ob keine Bewegung des Bildpunktes vorliegt, indem sie den Wert des Bildpunktes mit dem Wert des um den Kandidatenvektor verschobenen Bildpunktes und des Bildpunktes gleicher Lage des nachfolgenden Bildes bzw. Teilbildes vergleichen.

## Claims

1. A method of detecting horizontal movements in the picture contents of time-sequential frames or fields composed of scanning lines of a picture signal,
characterized in that
- edges are detected in the scanning lines by comparing the pixel values of successive pixels,
- a displacement vector indicating the horizontal displacement of the edge is determined for each detected edge by comparing the location of the detected edges in successive frames or fields,
- the validity of each displacement vector is checked by comparing the pixel values of a plurality of pixels located behind the associated edge,
- a candidate vector is filtered from a plurality of successive displacement vectors for which said check has yielded a positive result, and
- for each pixel of a scanning line of a frame or a field it is separately checked whether there is a movement in accordance with one or a plurality of candidate vectors or whether there is no movement of the pixel by comparing the value of the pixel with the value of the pixel displaced by the candidate vector and the value of the pixel having the same position in the subsequent frame or field.

2. A method as claimed in Claim 1, characterized in that the candidate vectors filtered from the displacement vectors are subjected to a post-filtering treatment, and in that a post-filtered candidate vector is filtered from the candidate vectors determined for the same scanning lines of at least two successive frames or fields.

3. A method as claimed in Claim 2, characterized in that for each scanning line of a frame or field exactly one candidate vector is filtered from the three last-determined displacement vectors, which candidate vector is subjected to the post-filtering treatment.

4. A method as claimed in Claim 2 or 3, characterized in that the post-filtered candidate vectors are taken from the candidate vectors of the same scanning lines of three successive frames or fields.

5. A method as claimed in any one of Claims 2 to 4, characterized in that the filtering of the displacement vectors and/or the post-filtering of the candidate vectors is a median filtering.

6. A method as claimed in Claim 4 or 5, characterized in that the post-filtered candidate vector is utilized for the pixels of a scanning line to check whether there is a movement in accordance with this candidate vector or whether there is no movement, and in that this scanning line is comprised in the frame or field which time-sequentially follows the frames or fields for which the candidate vectors were determined and from which vectors the post-filtered candidate vector has resulted.

7. A method as claimed in Claim 6, characterized in that the post-filtered candidate vector is utilized for the pixel-by-pixel check of that scanning line of the subsequent frame or field that is located three lines before the scanning lines of the previous frames or fields for which the candidate vectors were determined and from which vectors the post-filtered candidate vector has resulted.

8. A method as claimed in any one of Claims 1 to 7, characterized in that the check to be carried out for each pixel of a scanning line of a frame or field on whether there is a movement in accordance with one or more candidate vectors or whether there is no movement of the pixels by comparing the value of the pixel with the value of the pixel displaced by the candidate vector and of the pixel having the same location of the subsequent frame or field, is realised in such a way that the results of the check for a predeterminable number of pixels, half of which is located before and half of which is located after the pixel to be checked on its movement in the scanning line, are separately added for both checks and in that the decision whether the possibly post-filtered candidate vector is valid or not valid for the checked pixel is taken in dependence upon the value of this sum.

9. A method as claimed in Claim 8, characterized in that the candidate vector for the checked pixel is only valid when a movement in accordance with the candidate vector is more frequently determined for the predeterminable number of pixels than no movement.

10. A method as claimed in Claim 8 or 9, characterized in that the candidate vector for the checked pixel is only valid when a movement in accordance with the candidate vector was determined for at least half the predeterminable number of checked pixels.

11. A method as claimed in any one of Claims 8 to 10, characterized in that the candidate vector for the checked pixel is only valid when the candidate vector itself exceeds a predeterminable minimum value, the minimum value being preferably equal to a movement of two pixels per frame or field.

12. A method as claimed in any one of Claims 8 to 11, characterized in that the predeterminable number of pixels is larger than 7 and smaller than 25.

13. A method as claimed in any one of Claims 1 to 12, characterized in that the validity of each displacement vector is checked by adding the values of eight pixels which are located in the two frames or fields behind the detected edge and by comparing the values of the two sums.

14. A method as claimed in any one of Claims 1 to 13, characterized in that the pixel values of successive pixels in the scanning lines for detecting the edges are compared by subtracting the pixel values, and in that an edge is only detected when this difference exceeds a threshold value varied in dependence upon the modulation depth of the television signal.

15. A method as claimed in Claim 14, characterized in that the threshold value has half the value of the maximum pixel value of the previous scanning line.

16. A method as claimed in Claim 14, characterized in that the edge is recognized in the same line of the subsequent frame or field only when the difference value determined for this edge deviates by a maximum value of 1/4 of the maximum pixel value of the previous scanning line from the difference value determined for the edge in the same scanning line for the other frame or field.

17. A method as claimed in any one of Claims 1 to 16, characterized in that for the pixel-by-pixel check whether there is a movement in accordance with the possibly post-filtered candidate vector(s) a threshold value is used whose value, which may not be exceeded during the comparison, is varied in dependence upon the vertical and horizontal spatial frequencies of the picture contents of the television signal, the threshold value increasing as the spatial frequency is higher.

18. A method as claimed in any one of Claims 1 to 17, for a television signal which has fields generated in accordance with the interlaced scanning mode, characterized in that a vertical filtering, preferably a median filtering is performed in one of two successive fields before detection of the movement.

19. A method as claimed in any one of Claims 1 to 18, characterized in that the picture signal is a digital picture signal which comprises luminance and chrominance components and in that only the luminance signal component is utilized for the method.

20. An arrangement for performing the method as claimed in Claim 1, characterized in that means for comparing the pixel values of successive pixels are provided, which means are followed by an edge detector, in that means are provided which detect the position of the edges in the successive frames or fields and which determine a displacement vector for each detected edge, in that means are provided which, by comparing the pixel values of a plurality of pixels located behind the associated edge, check for each displacement vector whether these vectors have relevant values and which means filter a candidate vector from a plurality of successive displacement vectors for which said check has yielded a positive result, and in that means are provided which separately check for each pixel of a scanning line of a frame or field whether there is a movement in accordance with one or a plurality of candidate vectors, or whether there is no movement of the pixel in that the value of the pixel is compared with the value of the pixel displaced by the candidate vector and the value of the pixel having the same position in the subsequent frame or field.

## Revendications

1. Procédé pour déterminer les mouvements horizontaux dans les contenus images, d'images ou de trames successives d'un signal d'image, qui sont formés de lignes d'images, caractérisé en ce que :
- des bords sont déterminés dans les lignes d'images par comparaison des valeurs de points d'images pour des points d'images successifs;
- pour chaque bord déterminé, est déterminé un vecteur de déplacement qui indique le déplacement horizontal du bord par comparaison de la position des bords déterminés dans des images ou des trames successives;
- pour chacun des vecteurs de déplacement, il est vérifié par comparaison des valeurs de points d'images pour plusieurs points d'images situés derrière le bord associé en question, si ces vecteurs présentent des valeurs adéquates;
- à partir de plusieurs vecteurs de déplacement successifs pour lesquels la vérification a donné un résultat positif, un vecteur candidat est séparé par filtrage, et
- pour chaque point d'image d'une ligne d'image d'une image ou trame, il est vérifié séparément s'il y a un mouvement correspondant à un ou à plusieurs vecteurs candidats ou s'il n'y pas de mouvement du point d'image en comparant la valeur du point d'image à la valeur du point d'image déplacé du vecteur candidat et du point d'image occupant la même position dans l'image ou trame suivante.

2. Procédé suivant la revendication 1, caractérisé en ce que les vecteurs candidats, séparés par filtrage des vecteurs de déplacement, sont pour leur part soumis à un postfiltrage et qu'à partir des vecteurs candidats déterminés pour les mêmes lignes d'images d'au moins deux images ou trames successives un vecteur candidat ayant subi un postfiltrage est séparé par filtrage.

3. Procédé suivant la revendication 2, caractérisé en ce que pour chaque ligne d'image d'une image ou trame, exactement un vecteur candidat est séparé par filtrage des trois vecteurs de déplacement déterminés en dernier lieu, ce vecteur candidat étant, à son tour, soumis au postfiltrage.

4. Procédé suivant la revendication 2 ou 3, caractérisé en ce que les vecteurs candidats postfiltrés issus des vecteurs candidats des mêmes lignes d'images de trois images ou trames successives sont utilisés.

5. Procédé suivant l'une quelconque des revendications 2 à 4, caractérisé en ce que le filtrage des vecteurs de déplacement et/ou le postfiltrage des vecteurs candidats est un filtrage de valeur médiane.

6. Procédé suivant la revendication 4 ou 5, caractérisé en ce que le vecteur candidat postfiltré pour les points d'images d'une ligne d'image est utilisé pour vérifier si un mouvement correspondant à ce vecteur candidat est présent ou si aucun mouvement n'est présent et que cette ligne d'image est contenue dans l'image ou trame qui suit dans le temps les images ou trames pour lesquelles ont été déterminés les vecteurs candidats dont est issu le vecteur candidat postfiltré.

7. Procédé suivant la revendication 6, caractérisé en ce que le vecteur candidat postfiltré est utilisé pour la vérification par point d'image de la ligne d'image de l'image ou trame suivante qui précède de trois lignes les lignes d'images des images ou trames précédentes pour lesquelles ont été déterminés les vecteurs candidats dont est issu le vecteur candidat postfiltré.

8. Procédé suivant l'une quelconque des revendications 1 à 7, caractérisé en ce que la vérification à effectuer pour chaque point d'image d'une ligne d'image d'une image ou trame pour déterminer si un mouvement correspondant à un ou plusieurs vecteurs candidats est présent ou si aucun mouvement des points d'images n'est présent par comparaison de la valeur du point d'image à la valeur du point d'image déplacé du vecteur candidat et du point d'image occupant la même position dans l'image ou trame suivante, est réalisée de manière telle que les résultats de vérification pour un nombre prédéfinissable de points d'images qui sont situés à peu près pour moitié avant ou pour moitié après le point d'image dont le mouvement doit être examiné dans la même ligne d'image, sont sommés séparément pour les deux vérifications et que la décision portant sur le fait que le vecteur candidat éventuellement postfiltré pour le point d'image examiné est valide ou non est prise en fonction de la valeur de cette somme.

9. Procédé suivant la revendication 8, caractérisé en ce que le vecteur candidat pour le point d'image examiné n'est valide que lorsque, pour le nombre prédéfinissable de points d'images, la détermination donne plus souvent un mouvement correspondant au vecteur candidat que pas de mouvement.

10. Procédé suivant la revendication 8 ou 9, caractérisé en ce que le vecteur candidat pour le point d'image examiné n'est valide que lorsque, pour au moins la moitié du nombre prédéfinissable de points d'images, la détermination dans la vérification montre un mouvement suivant le vecteur candidat.

11. Procédé suivant l'une quelconque des revendications 8 à 10, caractérisé en ce que le vecteur candidat pour le point d'image examiné n'est valable que lorsque le vecteur candidat excède lui-même une valeur minimale prédéfinissable et que la valeur minimale correspond, de préférence à un mouvement de deux points d'images par image ou trame.

12. Procédé suivant l'une quelconque des revendications 8 à 11, caractérisé en ce que le nombre prédéfinissable de points d'images est supérieur à 7 et inférieur à 25.

13. Procédé suivant l'une quelconque des revendications 1 à 12, caractérisé en ce que la validité de chacun des vecteurs de déplacement est vérifiée par sommation des valeurs de chaque fois huit points d'images qui sont situés dans les deux images ou trames après le bord déterminé et par comparaison des valeurs des deux sommes.

14. Procédé suivant l'une quelconque des revendications 1 à 13, caractérisé en ce que la comparaison des valeurs de points d'images successifs dans les lignes d'images aux fins de la détermination de bords est réalisée par formation de différences entre les valeurs de points d'images et qu'un bord n'est détecté que lorsque cette différence excède une valeur de seuil variant en fonction de la profondeur de modulation du signal de télévision.

15. Procédé suivant la revendication 14, caractérisé en ce que la valeur de seuil correspond à la moitié de la valeur de point d'image maximale de la ligne d'image précédente.

16. Procédé suivant la revendication 14, caractérisé en ce que la nouvelle reconnaissance du bord dans la même ligne de l'image ou trame suivante n'est réalisée que lorsque la valeur de différence déterminée pour celle-ci s'écarte au maximum de 1/4 de la valeur de point d'image maximale de la ligne d'image précédente, de la valeur de différence de bord déterminée dans la même ligne d'image dans l'autre image ou trame.

17. Procédé suivant l'une quelconque des revendications 1 à 16, caractérisé en ce que pour la vérification par point d'image du fait qu'un mouvement correspondant au vecteur candidat éventuellement postfiltré est présent, on utilise une valeur de seuil dont la valeur qui ne peut être excédée lors de la comparaison varie en fonction des fréquences locales verticale et horizontale du contenu image du signal de télévision, la valeur de seuil augmentant avec les fréquences locales élevées.

18. Procédé suivant l'une quelconque des revendications 1 à 17, pour un signal de télévision qui présente des trames générées par un procédé à entrelacement, caractérisé en ce que dans chaque fois l'une de deux trames successives, est réalisé, avant la détermination de mouvement, un filtrage vertical qui est de préférence un filtrage de valeur médiane.

19. Procédé suivant l'une quelconque des revendications 1 à 18, caractérisé en ce qu'il s'agit d'un signal d'image numérique dans lequel sont contenues des fractions de luminance et de chrominance et que pour le procédé seule la fraction de signal de luminance est utilisée.

20. Dispositif pour l'exécution du procédé suivant la revendication 1, caractérisé en ce que des moyens sont prévus pour comparer les valeurs point d'image de points d'images successifs et sont suivis d'un détecteur de bord, que des moyens sont prévus pour déterminer la position des bords dans des images ou trames successives et pour déterminer pour chaque bord déterminé un vecteur de déplacement, que des moyens sont prévus qui, pour chaque vecteur de déplacement, vérifient par comparaison des valeurs point d'image de plusieurs points d'images situés après le bord chaque fois associé, si ces vecteurs présentent des valeurs adéquates et qui isolent par filtrage un vecteur candidat à partir de plusieurs vecteurs de déplacement successifs pour lesquels cette vérification a donné un résultat positif et que des moyens sont prévus qui, pour chaque point d'image d'une ligne d'image d'une image ou trame vérifient séparément si un mouvement correspondant à un ou plusieurs vecteurs candidats est présent ou si aucun mouvement de point d'image n'est présent par le fait qu'ils comparent la valeur du point d'image à la valeur du point d'image déplacée du vecteur candidat et du point d'image occupant la même position dans l'image ou trame suivante.
